# EUROPÄISCHE PATENTSCHRIFT

(11) **EP 0 930 272 B1**
(45) Veröffentlichungstag und Bekanntmachung des Hinweises auf die Patenterteilung: **08.05.2002**
(21) Anmeldenummer: 98124285.2
(22) Anmeldetag: 19.12.1998
(51) Int. Cl.: C02F 1/42, B01J 47/00, B01J 49/00

(54) **Verfahren zur Teilentsalzung von Wasser**
Method for partial demineralization of water
Procédé de déminéralisation partielle de l'eau

(30) Priorität: 15.01.1998 DE 19801174
(43) Veröffentlichungstag der Anmeldung: 21.07.1999
(73) Patentinhaber: VA TECH WABAG Deutschland GmbH & Co. KG, 10707 Berlin (DE); Forschungszentrum Karlsruhe GmbH, 76133 Karlsruhe (DE)
(72) Erfinder: Hagen, Klaus, Dr., 95326 Kulmbach (DE); Sauer, Uwe, 95326 Kulmbach (DE); Schmid, Hans-Dieter, 95336 Mainleus (DE); Schultheiss, Peter, 95336 Mainleus (DE); Sauerschell, Werner, 95359 Kasendorf (DE); Höll, Wolfgang, Dr., 76275 Ettlingen (DE); Stepanek, Astrid, 71032 Böblingen (DE)
(74) Vertreter: Radünz, Ingo, Dipl.-Ing.

(56) Entgegenhaltungen:
- EP-A- 0 056 850
- DE-A- 1 920 497
- US-A- 4 496 667
- US-A- 4 988 737

## Beschreibung

Die Erfindung betrifft ein Verfahren zur Teilentsalzung mit den Merkmalen des Oberbegriffes des Anspruches 1.

Ein ähnliches Verfahren ist aus der EP-A-0 056 850 und aus "Vom Wasser 69 (1987), Seiten 259 - 267" bekannt. Dieses Verfahren dient der Teilentsalzung von Wasser insbesondere bei der Trinkwasseraufbereitung. Aufgrund der Verwendung einer Mischung aus basischen und sauren Ionenaustauschern und der Regeneration der verbrauchten Ionenaustauscher mit Hilfe von CO₂-haltigem Wasser zeichnet sich das bekannte Verfahren dadurch aus, daß keine überschüssigen Regenerierchemikalien eingesetzt werden müssen und daß eine zusätzliche Aufsalzung des Regenerierwassers vermieden werden kann.

Eine zusätzliche Aufsalzung des Regenerierwassers tritt bei dem in der DE-A-1 920 497 beschriebenen Verfahren ein. Dieses Verfahren dient ebenfalls der Teilentsalzung von Wasser mit Hilfe von schwach sauren Kationenaustauschern und stark basischen Anionenaustauschern, wobei auch eine Adsorption von organischen Substanzen durch die stark basischen Anionenaustauscher stattfindet. Die Regeneration der beladenen Ionenaustauscher erfolgt durch eine Behandlung mit einer verdünnten Mineralsäure oder einer sauren Salzlösung.

Der Erfindung liegt die Aufgabe zugrunde, das gattungsgemäße Verfahren dahingehend zu erweitern, daß weitere im Rohwasser vorhandene Stoffe verringert werden können und daß die Einsatzstoffe besser ausgenutzt werden.

Diese Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind Gegenstand der Unteransprüche.

Ziel der Erfindung ist es, daß sich mit dem gattungsgemäßen Verfahren unter Verwendung der Ionenaustauschermischung auch der Gehalt an organisch gebundenem Kohlenstoff (TOC- und DOC-Wert) reduzieren läßt. Die intermittierende Regeneration mit Clhaltigen Chemikalien entfernt den nicht mit CO₂ entfernbaren, angelagerten Kohlenstoff von den Ionenaustauschern. Die unmittelbare Wiederverwendung des Spülwassers gemäß Anspruch 2, die Wiederverwendung des Vorfiltrates (Anspruch 3) und des CO₂ (Anspruch 5) sowie die Nachbehandlung des verbrauchten Regenerierwassers gemäß Anspruch 4 verbessern in Verbindung mit der zusätzlichen Verringerung des organischen Kohlenstoffs die Ausnutzung der Einsatz- und Betriebsstoffe und tragen damit zur Wirtschaftlichkeit des Verfahrens bei. Eine weitergehende Reduzierung organischer Inhaltsstoffe gemäß Anspruch 7 wird durch die Zugabe von Pulveraktivkohle erreicht, die sich bei der nachfolgenden Regeneration wieder entfernen läßt.

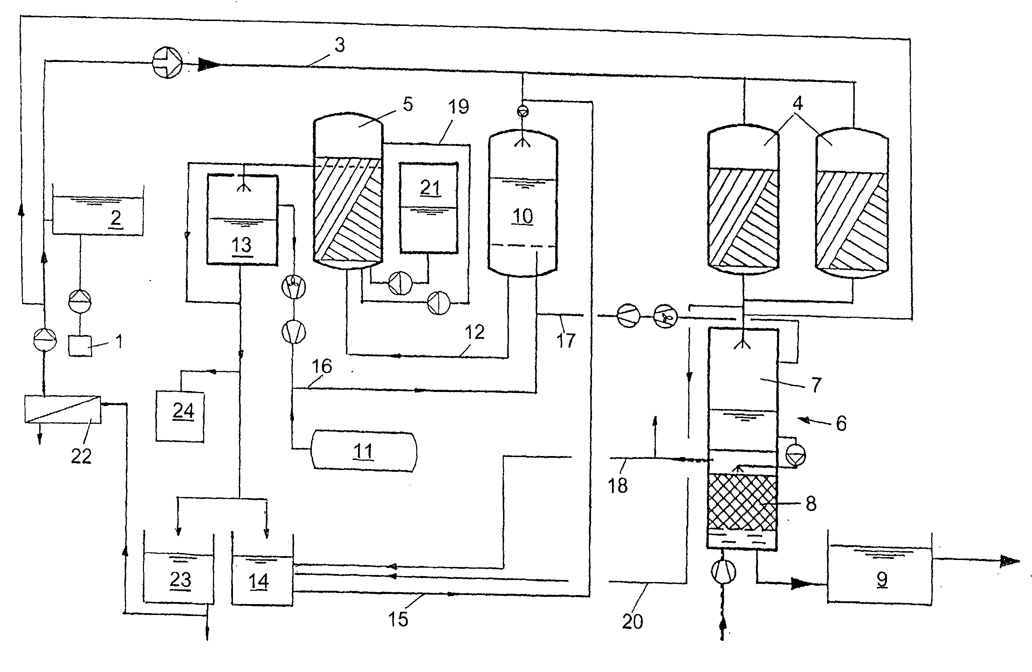

Die Erfindung sei an einem Ausführungsbeispiel und der Zeichnung näher erläutert. Die Zeichnung zeigt ein Verfahrensschema für die Teilentsalzung von Wasser.

Aus einem Brunnen 1 wird Rohwasser entnommen und entweder direkt genutzt oder in einen Rohwasserspeicher 2 gefördert. Aus diesem Rohwasserspeicher 2 wird das aufzubereitende Wasser über eine Rohwasserleitung 3 einer aus einem oder mehreren Filtern 4, 5 bestehenden Filteranlage zugeführt. In dem gezeigten Beispiel sind die beiden in der Zeichnung rechts dargestellten Filter 4 in Betrieb, während das links dargestellte Filter 5 regeneriert wird. Die Filter 4, 5 sind mit einer Mischung aus schwach sauren Kationenaustauschern und stark basischen Anionenaustauschern gefüllt. Das Mischungsverhältnis von Kationenaustauschern zu Anionenaustauschern beträgt 15 : 1 bis 1 : 15. In den Filtern 4, 5 wird dem Rohwasser durch den Kontakt mit den Ionenaustauschern ein Teil seines Salzgehaltes entzogen. Das teilentsalzte Reinwasser gelangt in einen zweistufigen Reinwasserentgaser 6 zur Einstellung des Kalk-Kohlensäure-Gleichgewichtes. In der ersten Stufe, einem Vakuumentgaser 7, wird aus dem Reinwasser durch Anlegen eines Unterdrucks CO₂ ausgetrieben. Anschließend wird das Reinwasser der zweiten Stufe einem Rieselentgaser 8 zugeführt, in den Luft eingeblasen wird. Das entgaste Reinwasser wird über einen Reinwasserspeicher 9 oder direkt an die Endverbraucher abgegeben. Auf die Vakuumentgaserstufe 7 kann ggf. verzichtet werden.

Die beladenen Ionenaustauscher werden durch CO₂-haltiges Wasser regeneriert. Dieses Regenerierwasser wird in einem Reaktionsspeicher 10 bereitet, in den von oben Wasser aus der Rohwasserleitung 3 oder ggf. Wasser aus dem Reinwasserspeicher 9 und von unten CO₂ aus einem CO₂-Tank 11 und aus den Rückführungen aus dem Vakuumentgaser 7 und dem später beschriebenen Eluatentgaser 13 eingespeist werden. Das Regenerierwasser wird über eine Leitung 12 von unten, d. h. entgegen der Entsalzungsrichtung in das zu regenerierende Filter 5 gegeben. Das bei der Regeneration entstehende Eluat, wird nach dem Durchtritt durch das Filter 5 einem mit Unterdruck betriebenen Eluatentgaser 13 zugeführt, wo CO₂ aus dem Eluat ausgetrieben wird. Das entgaste Eluat wird entweder direkt einen Vorfluter 24 zugeführt oder in einem Eluatspeicher 23 zwischengespeichert, aus dem es vergleichmäßigt an das Oberflächenwasser abgegeben wird. Ein Teil des Eluats kann über eine Eluatleitung 15 aus einem weiteren Zwischenspeicher 14 in den Reaktionsspeicher 10 gegeben werden, wo es bei der Regeneration verwendet werden kann.

Das in dem Eluatentgaser 13 aus dem Eluat ausgetriebene CO₂ wird aufgefangen und über eine Leitung 16 in den Reaktionsspeicher 10 gegeben. In gleicher Weise wird das in der Vakuumentgaserstufe 7 des Reinwasserentgasers 6 anfallende CO₂ über eine Leitung 17 in den Reaktionsspeicher 10 zurückgeführt. Das in dem Rieselentgaser 8 freigesetzte CO₂ wird entweder über eine Leitung 18 in das im Zwischenspeicher 14 gespeicherte Eluat/Spülwasser/Vorfiltrat eingespeist, wodurch eine weitere Vorbeladung dieses Wassers mit CO₂ erreicht wird, oder direkt ins Freie geschickt.

Nach jeder Regenerationsphase wird das regenerierte Filter 5 mit Spülwasser gespült, um die Ionenaustauscher von den Resten des Regenerierwassers zu befreien. Das Spülwasser wird dem Rohwasser entnommen. Das verbrauchte Spülwasser wird nach dem Austritt aus dem Filter 4, 5 in den Zwischenspeicher 14 zurückgeführt und für die nächste Regeneration bereit gehalten.

Das Vorfiltrat, das als erstes ein regeneriertes Filter 4, 5 verläßt, wird nicht als Reinwasser abgegeben. Statt dessen wird dieses Vorfiltrat über eine Vorfiltratleitung 20 ebenfalls in den Zwischenspeicher 14 eingespeist und zur nächsten Regeneration verwendet. Ein separater CO₂-Kreislauf 19 dient der Auflockerung des Ionenaustauschermaterials.

Der im Rohwasser vorhandene gesamte organische Kohlenstoff und der im Wasser gelöste organische Kohlenstoff (TOC-Wert und DOC-Wert) werden von der verwendeten Ionenaustauschermischung in dem Rohwasser beim Durchtritt durch die Filter vermindert. Dieser Kohlenstoff lagert sich auf den Ionenaustauschern ab. Zusätzlich zu der oben beschriebenen Regeneration mit CO₂-haltigem Wasser werden die Filter 4, 5 diskontinuierlich mit einer Regenerierlösung regeneriert. Die Regenerierlösung besteht aus HCl, NaCl, NaOH oder aus einer Mischung aus NaCl und NaOH. Diese Regenerierlösung wird in einem Speicherbehälter 21 bereit gehalten und in zeitlichen Abständen, die von der Beladung abhängig sind, durch die Filter 4, 5 gedrückt. Die verbrauchte Regenerierlösung wird entsorgt.

Das Eluat enthält die Salzfracht, die dem Rohwasser entzogen wurde. Zur Erhöhung der Ausbeute kann das Eluat vollständig oder teilweise einer Membranfiltereinheit 22 zugeführt werden.

Die Membranfiltereinheit 22 arbeitet nach dem Verfahren der Umkehrosmose, der Nanofiltration oder der Elektrodialyse. Das in der Membranfiltereinheit 22 gewonnene Permeat wird entweder dem Rohwasserspeicher 2 zugeführt, oder dem in der Filteranlage zu behandelnden Rohwasser oder dem Reinwasser nach Ablauf der Filter 4, 5 beigemischt. Das salzhaltige Konzentrat wird dem Vorfluter 24 oder einer Kläranlage zugeführt.

## Patentansprüche

1. Verfahren zur Teilentsalzung von Wasser, insbesondere von Trinkwasser, mit einer Mischung aus schwach sauren Kationenaustauschern und stark basischen Anionenaustauschern, wobei die beladenen Ionenaustauscher durch CO₂-haltiges Wasser gegebenenfalls unter Zusatz von CaCO₃, CaCO₃/MgO,Ca(OH)₂ oder ähnlichem regeneriert werden und die regenerierten Ionenaustauscher vor der erneuten Teilentsalzung mit Spülwasser gespült werden, **dadurch gekennzeichnet, daß** gleichzeitig mit der Teilentsalzung die in dem Wasser vorhandenen organischen Kohlenstoffverbindungen reduziert werden und daß die beladenen Ionenaustauscher zusätzlich zu der Regeneration durch das CO₂-haltige Wasser diskontinuierlich mit HCl, NaCl, NaOH oder einer Mischung aus NaCl und NaOH regeneriert werden.

2. Verfahren nach Anspruch 1, **dadurch gekennzeichnet, daß** das Spülwasser nach dem Durchlauf durch das die Ionenaustauscher enthaltenen Filter unmittelbar einem Zwischenspeicher zugeführt wird, aus dem es unmittelbar für die nächste Regeneration entnommen wird.

3. Verfahren nach Anspruch 1, **dadurch gekennzeichnet, daß** das Vorfiltrat einem Zwischenspeicher zugeführt wird und für die nächste Regeneration verwendet wird.

4. Verfahren nach Anspruch 1, **dadurch gekennzeichnet, daß** das bei der Regeneration entstehende Eluat mit einer Membranfiltereinheit aufbereitet und das dabei anfallende Permeat zurückgeführt und das Konzentrat einem Vorfluter oder einer Kläranlage etc. zugeführt wird.

5. Verfahren nach Anspruch 1, **dadurch gekennzeichnet, daß** das in der ersten Stufe der Entgasung des Reinwassers freigesetzte CO₂ aufgefangen und für die Regeneration zurückgeführt wird.

6. Verfahren nach Anspruch 1, **dadurch gekennzeichnet, daß** das Eluat der Regeneration sowie evtl. das Spülwasser mittels Vakuumentgaser behandelt und das entnommene CO₂ zurückgeführt wird.

7. Verfahren nach Anspruch 1, **dadurch gekennzeichnet, daß** dem Rohwasser vor den Ionenaustauschern Pulveraktivkohle zur weiteren Reduzierung organischer Inhaltsstoffe zugesetzt wird, daß diese durch die Ionenaustauscher zurückgehalten und bei der nächsten Regeneration wieder an das Eluat abgegeben wird.

8. Verfahren nach Anspruch 1, **dadurch gekennzeichnet, daß** das in der zweiten Stufe der Entgasung des Reinwassers freigesetzte CO₂ aufgefangen und für die Regeneration zurückgeführt wird.

9. Verfahren nach einem der Ansprüche 1 bis 8, **dadurch gekennzeichnet, daß** das Mischungsverhältnis der schwach sauren Kationenaustauschern und der stark basischen Anionenaustauschern 15:1 bis 1:15 beträgt.

## Claims

1. Method for partial desalination of water, especially drinking water, with a mixture of weakly acidic cation exchangers and strongly basic anion exchangers, wherein the charged ion exchangers are regenerated by water containing CO₂, optionally with addition of CaCO₃, CaCO₃/MgO, Ca(OH)₂ or similar and the regenerated ion exchangers are washed with washing water before renewed partial desalination, **characterised in that** simultaneously with the partial desalination the organic carbon compounds present in the water are reduced and the charged ion exchangers are discontinuously regenerated by HCl, NaCl, NaOH or a mixture of NaCl and NaOH in addition to regeneration by water containing CO₂.

2. Method according to claim 1, **characterised in that** the washing water after passage through the filter containing the ion exchangers is fed directly to an intermediate store from which it is directly removed for the next regeneration.

3. Method according to claim 1, **characterised in that** the prefiltrate is fed to an intermediate store and is used for the next generation.

4. Method according to claim 1, **characterised in that** the eluate arising in the regeneration is prepared by a membrane filter unit and the permeate occurring **in that** case is fed back and the concentrate is fed to a drain or to a clarifying plant, etc.

5. Method according to claim 1, **characterised in that** the CO₂ liberated in the first stage of degasification of the pure water is collected and fed back for the regeneration.

6. Method according to claim 1, **characterised in that** the eluate of the regeneration as well as possibly the washing water is treated by means of a vacuum degasifier and the removed CO₂ is fed back.

7. Method according to claim 1, **characterised in that** pulverulent activated carbon for further reduction of organic constituents is added to the raw water ahead of the ion exchangers and that this is retained by the ion exchangers and delivered back to the eluate in the next regeneration.

8. Method according to claim 1, **characterised in that** CO₂ liberated in the second stage of degasification of the pure water is collected and is fed back for the regeneration.

9. Method according to one of claims 1 to 8, **characterised in that** the mixture ratio of the weakly acidic cation exchangers and the strongly basic anion exchangers amounts to 15:1 to 1:15.

## Revendications

1. Procédé de déminéralisation partielle d'eau, en particulier d'eau potable, avec un mélange d'échangeurs de cations faiblement acides et d'échangeurs d'anions fortement basiques, dans lequel les échangeurs d'ions épuisés sont régénérés par de l'eau contenant CO₂, le cas échéant avec addition de CaCO₃, CaCO₃/MgO, Ca(OH)₂ ou similaire et les échangeurs d'ions régénérés sont rincés avec de l'eau de rinçage avant le renouvellement de la déminéralisation partielle, **caractérisé en ce que** simultanément à la déminéralisation partielle, les liaisons carbones organiques présentes dans l'eau sont réduites et **en ce que**, en sus de la régénération par l'eau contenant CO₂, les échangeurs d'ions épuisés sont régénérés en discontinu avec HCl, NaCl, NaOH ou un mélange de NaCl et de NaOH.

2. Procédé selon la revendication 1, **caractérisé en ce que** l'eau de rinçage, après le passage à travers le filtre contenant les échangeurs d'ions, est acheminée directement vers un réservoir intermédiaire, à partir duquel elle est directement prélevée pour la régénération suivante.

3. Procédé selon la revendication 1, **caractérisé en ce que** le pré-filtrat est acheminé vers un réservoir intermédiaire et est utilisé pour la régénération suivante.

4. Procédé selon la revendication 1, **caractérisé en ce que** l'éluat se formant lors de la régénération est retraité à l'aide d'une unité de filtre à membrane et le perméat se formant alors est recyclé et le concentrat acheminé vers un collecteur ou une station d'épuration etc.

5. Procédé selon la revendication 1, **caractérisé en ce que** le CO₂ libéré dans la première étape du dégazage de l'eau pure est collecté et recyclé pour la régénération.

6. Procédé selon la revendication 1, **caractérisé en ce que** l'éluat de la régénération ainsi qu'éventuellement l'eau de rinçage est traité au moyen du dégazeur à vide et le CO₂ prélevé est recyclé.

7. Procédé selon la revendication 1, **caractérisé en ce que** du charbon actif pulvérulent est ajouté à l'eau brute avant les échangeurs d'ions pour réduire davantage les composants organiques, que celui-ci est retenu par les échangeurs d'ions et est de nouveau déversé dans l'éluat lors de la régénération suivante.

8. Procédé selon la revendication 1, **caractérisé en ce que** le CO₂ libéré dans la seconde étape du dégazage de l'eau pure est collecté et recyclé pour la régénération.

9. Procédé selon l'une des revendications 1 à 8, **caractérisé en ce que** le rapport de mélange des échangeurs de cations faiblement acides et des échangeurs d'anions fortement basiques est de 15:1 à 1:15.
